# EUROPEAN PATENT SPECIFICATION

(11) **EP 2 178 355 B1**
(45) Date of publication and mention of the grant of the patent: **27.04.2011**
(21) Application number: 08753770.0
(22) Date of filing: 15.05.2008
(51) Int. Cl.: A01G 9/02, A01G 9/08

(54) **POT ASSEMBLY**
TOPFANORDNUNG
ASSEMBLAGE DE POTS

(30) Priority: 24.07.2007 NL 2000774
(43) Date of publication of application: 28.04.2010
(73) Proprietor: So Generation B.V., 2665 ND Bleiswijk (NL)
(72) Inventor: SMAAL, Johannes Pieter Jan, NL-2665 ND Bleiswijk (NL)
(74) Representative: Ketelaars, Maarten F.J.M.
(86) International application number: PCT/NL2008/050287
(87) International publication number: WO 2009/014429

(56) References cited:
- WO-A-00/27181
- WO-A-01/15516
- DE-A1-102005 011 187
- DE-U1-202007 015 581
- GB-A- 387 829
- US-A1- 2003 106 262

## Description

The present invention relates to a pot assembly according to the subjet-matter of Claim 1.

An assembly of this type is known from US application US 2003/0106262, which describes a closed outer pot provided with an inner pot which is to be placed therein and which is provided with openings to drain water away and provide ventilation for the plant which is situated in the inner pot.

When growing various kinds of plants and more particularly plants which, during cultivation, develop parts which grow outside the pot, problems may arise during the growing phase. Examples of such plants are Phalaenopsis and other orchids which grow air roots. If the inner pots are placed in, for example, a rolling container or on another growing support, adjacent plants will grow towards adjacent pots, resulting in an entanglement of plants and pots. Removing the air roots or other protruding plant parts results in damage to the plant. As a result, it is complicated to subsequently place such plants into the above-described pot assembly. It is an object of the present invention to avoid this drawback and to provide an improved pot assembly. In addition, it is an object of the present invention to provide a pot assembly which makes further automation possible and/or affects the growth of the plant in a positive manner.

More particularly, it is an object of the present invention to provide a pot assembly which is particularly suitable for growing pot-grown orchids.

According to the present invention, this object is achieved by a pot assembly having the features of Claim 1. As a result of the combination of measures as described in Claim 1, it is possible to grow pot-grown orchids in an optimum manner.

Due to the fact that the walls of the inner pot and outer pot are translucent, the root structure of the pot-grown orchid is given sufficient light so as to be able to guarantee optimum growth. By keeping the space between the top end edge of the inner pot and the opposite part of the outer pot small and preferably not allowing any clearance in between, it is no longer possible for plant parts to extend into such a clearance during cultivation. This means that, contrary to the prior art, it is, for example in the case of Phalaenopsis, no longer possible for air roots to extend in the space between the inner pot and outer pot during the development of the plant.

As a result, it is possible, according to the invention, to arrange the outer pot around the inner pot at the point in time when the cutting is planted in the inner pot and to keep the outer pot and inner pot together as an assembly during the entire cultivation process. As a result thereof, the plant, together with the air roots and other parts which extend in the width direction, will initially be enclosed within the inner pot and, upon further growth beyond the end edge of the inner pot, will develop inside the enclosure of the outer pot. As a result thereof, roots and other parts are not able to grow across the outer enclosure of the inner pot towards adjoining inner pots of other plants. The height of the outer pot is chosen in such a manner that such plant parts do not generally extend beyond the top edge of the outer pot and/or, if they do protrude above it, are guided by the outer wall in such a manner that the protrusion, viewed in top view, remains substantially inside the range of the largest dimension of the outer pot. The term outer pot is to be understood as referring to any structure which is suitable for surrounding and supporting the inner pot in the above-described manner. It may be assembled from various parts.

Using the present invention, it is possible to cultivate the plants after placing them in the inner pot/outer pot by placing a large number of outer pots against one another. Although the presence of the outer pot, due to the dimensions thereof, results in a slight reduction in the number of plants per square metre, this drawback is outweighed by the advantage which is achieved by the fact that it is no longer necessary to separate entangled plants. In addition, there is no longer any damage to the plants. With certain plants, a further advantage is accomplished by the fact that, due to the growth being directed to a greater extent in an upward direction, a higher yield in plants is achieved. Due to the presence of the outer pot, it is possible to control, for example, the growth of leaves and the like, which results in an improved final appearance of the plant after the outer pot has been separated from the inner pot.

By guiding the leaves upwards at an angle, further advantages compared to the natural, often horizontal, position of the leaves are achieved. Firstly, it is ensured that, during watering, the water will reach the roots, optionally via the leaves, and is not transported along the leaves to the ends of the leaves, as is the case with the horizontal situation. As a result thereof, less water is needed and thus fewer additives can be added to the water. In addition, the incident light can be distributed more efficiently. If the leaves are already made to grow at an angle at an early stage, this will result in a certain memory effect and they will not return to the horizontal position immediately once the outer pot is removed. This oblique position is deemed to promote sales.

In addition, it has been found that due to the fact that the plant is surrounded by an outer pot, an advantageous microclimate is created immediately above the substrate. This zone inside the outer pot is slightly warmer than the immediate surroundings, as a result of which, in particular in greenhouses, growth is boosted or the temperature can be lowered.

The maximum space between the top edge of the inner pot and the corresponding part of the outer pot may, for example, have a gap width of less than 5 mm. The outer pot preferably extends beyond the inner pot over a considerable height and this height is of course dependent on the respective plant and may, for example, vary between 5 cm and 20 cm.

More particularly, this height may be approximately 8 cm. In general, the length of the part of the outer pot which extends beyond the inner pot can be assumed to be at least half the height of said inner pot. According to an advantageous embodiment of the invention, the bottom of the inner pot extends further to the centre of the pot assembly than the bottom of the outer pot. As a result thereof, it is possible to access the inner pot from the bottom side, from outside, that is to say with the inner pot placed inside the outer pot. This may be important when placing the inner pot and outer pot inside one another (immediately after placing the cutting in the inner pot) and/or removing the inner pot from the outer pot (at the end of the growing phase). In the latter case, these parts may be separated from one another by applying a pressure force to the respective bottom part of the inner pot and holding the outer pot securely.

Separating the inner pot from the outer pot can be optimized by providing a central push-out accomodation in the inner pot.

According to a further particular embodiment of the invention, the outer pot is provided with a window at the outer wall of the inner pot. This makes it possible to see the inner pot. In addition, if a transparent inner pot is used, this also ensures that light can reach the inner pot unhindered. The relevant information which can be seen may comprise data about the plant in question and the various actions which have been performed thereon. It is also possible to provide the outer pot with information. As, according to a particular embodiment of the invention, the inner pot and outer pot are separated after cultivation and the outer pot is re-used, it is possible to attach relatively high-quality information carriers on the outer pot, such as a high-frequency identification chip (RFID). Thus, it is possible to accurately monitor the growing process of the respective plant. This window also makes the wall of the outer pot translucent. Preferably, a plurality of windows are provided and preferably these have a surface area which is as large as possible. That is to say that the outer pot preferably has no openings at all in the part which protrudes above the inner pot. The part of the outer pot which is on the same level as the inner pot is preferably provided with as many openings as possible, such as windows. According to a particular embodiment of the invention, the part which is at the same level as the wall of the inner pot essentially serves exclusively to support the part of the outer pot which extends beyond the inner pot.

The above-described small space between the top end of the inner pot and the corresponding part of the outer pot can be achieved in various ways. If the top end of the inner pot engages with the inner wall of the outer pot in a clamping manner, it is possible to accommodate the inner pot inside the outer pot without any clearance. Another possibility which can be combined with those mentioned above and below is to embody the inner pot and outer pot in such a manner that the bottoms of these pots lie against one another in the accommodation position. Furthermore, it is possible to provide the inner wall of the outer pot and the outer wall of the inner pot with engagement means. By way of example, providing a peripheral edge on the inside of the outer pot and a protruding part of the upper side of the wall of the inner pot, which rests on such a peripheral edge, may be mentioned. However, constructions are also possible where the outer pot is provided with projections in which the peripheral edge of the inner pot rests. Such projections and other parts may also serve as denesting projections for stacking the respective outer pots inside one another.

Both the inner pot and the outer pot may be made from translucent material, such as PP material.

Although it is possible to provide the part of the outer pot which protrudes above the inner pot with openings, it has been found that these openings are not necessary and in some cases, it is disadvantageous if such openings are present.

The present invention can be used to (further) automate the handling of plants, but it should be understood that it can also be used with systems which are not or are only partly automated.

The invention also relates to a combination consisting of a pot assembly comprising an inner pot and an outer pot accommodating the inner pot, wherein said outer pot, in the accommodation position, extends beyond said inner pot in the height direction, wherein the outside of the top end of said inner pot adjoins the inner wall of said outer pot in the accommodation position substantially without clearance, as well as a pot-grown orchid having leaves, in which said leaves are supported on the wall of said outer pot.

Preferably, the leaves of the pot-grown orchid are at an angle of more than 45° with respect to the horizontal.

According to a further advantageous embodiment of the invention, the top edge of the outer pot is of an undulating design. This makes it possible for a leaf to rest on the tops of the undulation (viewed from the inside) while allowing a flower stem of the respective pot-grown orchid to extend therebehind in the troughs. Thus, damage to the flower stem can be avoided and the flower stem is prevented from growing in a curved manner along the inner wall of the pot, since the undulations in the outer pot support the flower stem as much as possible in the upward direction.

The present invention also relates to a method for cultivating a pot-grown orchid comprising placing said pot-grown orchid with substrate into an inner pot, before, simultaneously therewith or immediately thereafter placing said inner pot into an outer pot, which outer pot, in the accommodation position, extends beyond the inner pot in the height direction, subsequently cultivating the plant and removing said inner pot from said outer pot just before delivery of said pot-grown orchid.

With pot-grown orchids, cultivating said plant may take at least 24 weeks. This may be followed by a period of 10-12 weeks at reduced temperature, which may, if desired, be followed by a finishing phase of approximately 10 weeks. Handling the assembly of inner pot/outer pot in growing areas while actions are being performed on the plant preferably takes place by placing it on a dish which is known per se. Such a dish may also be provided with identification means and such a dish has a weight which is such that it is stable and the pot and dish are prevented from falling over. The dish may be provided temporarily. Due to the presence of the outer pot, there is no longer the risk that adjacent plants become entangled with one another during transport. It should be understood that the invention may be used with any type of plant, such as, for example, anthuriums.

The above-described outer pot may, for example, have a height of approximately 20 cm, an outer diameter at the top side thereof of approximately 13-16 cm and at the bottom side of approximately 8 cm. The inner pot is adapted to match these dimensions. If the inner pot has different dimensions, the outer pot will be modified accordingly.

According to the method of the present invention, the inner pot and outer pot form a single entity as soon as the plant has been placed in the inner pot. That is to say, both during the first growing phase in the greenhouse and during the cooling period and the finishing phase, they form an assembly. In addition, it has been found that, with a preferred embodiment of the pot assembly according to the invention, the leaves of certain plants are forced to grow in the height direction immediately from the beginning. As a result, the incident light is more evenly distributed over each leaf. In addition, when the plant is sprayed, the water will be distributed more evenly as well, resulting in improved growth. In addition, the development of the stems which carry orchid flowers for example is also stimulated, the direction of the developing stems is influenced and the yield of the number of stems and thus the yield of the plant is higher. The final shape of the plant once the outer pot has been removed will be retained, at least partially. Thus, the leaves will be at a more upward angle which increases the commercial appeal.

The present invention makes it possible to further automate the handling and cultivation of plants.

The invention will be described below with reference to exemplary embodiments illustrated in the drawing, in which:
Fig. 1 shows a perspective view of a detailed first embodiment of an inner pot and outer pot;
Figs. 2a-g show various stages of the cultivation of a plant in the pot assembly illustrated in Fig. 1; and
Fig. 3 shows a further embodiment of the pot assembly according to the invention.

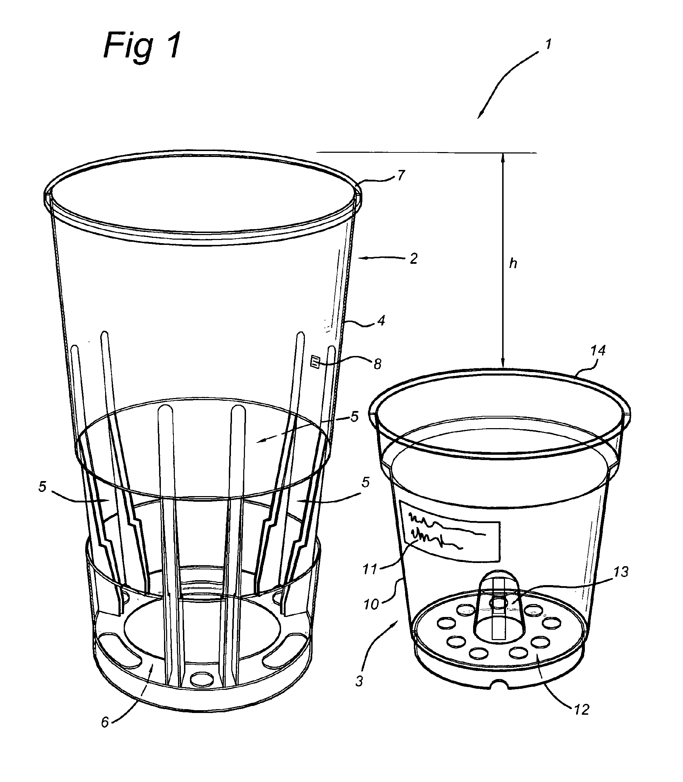

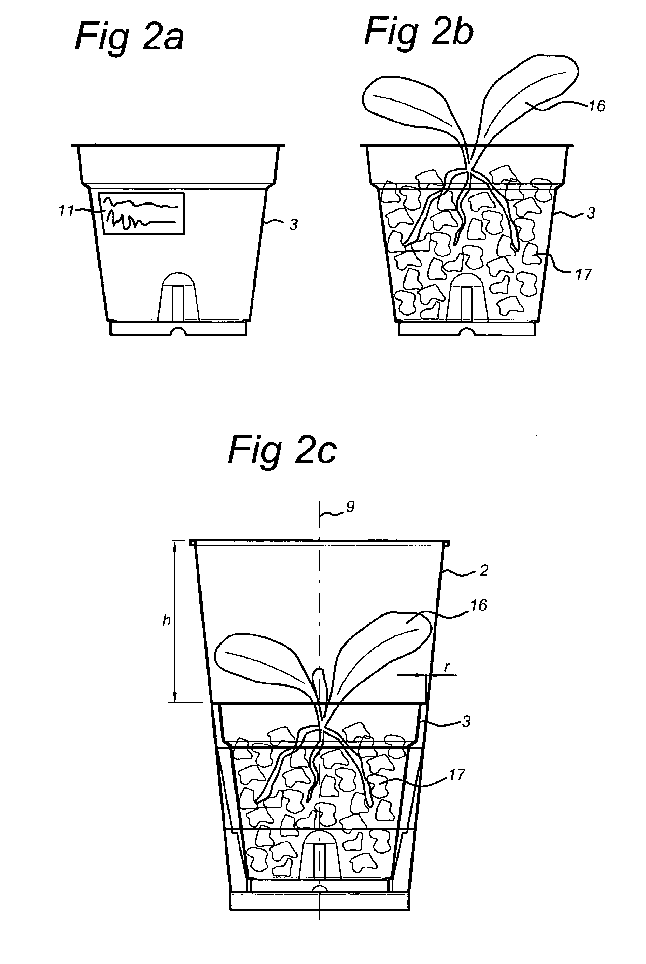

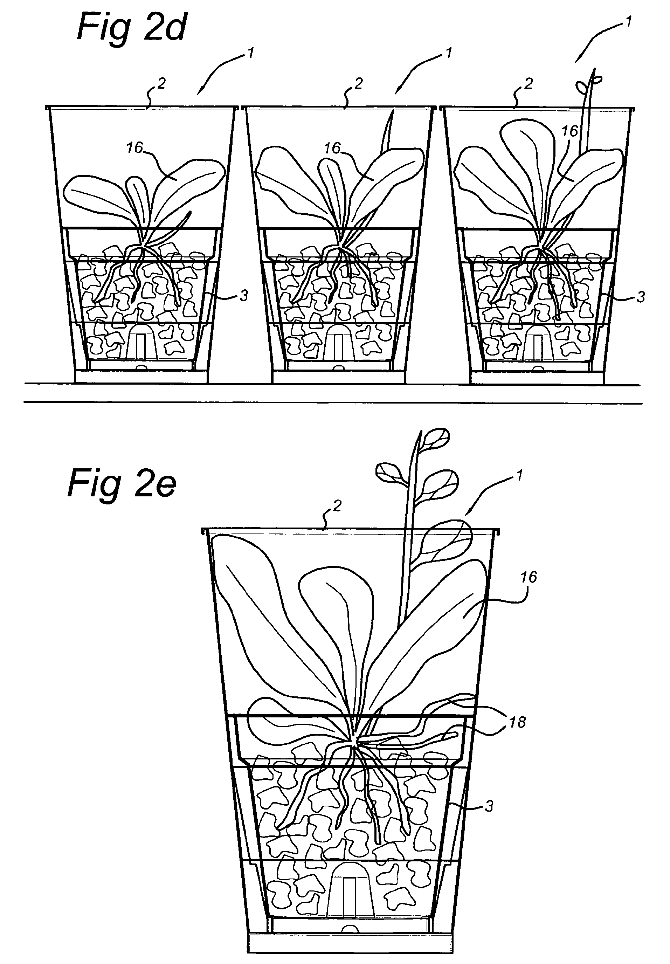

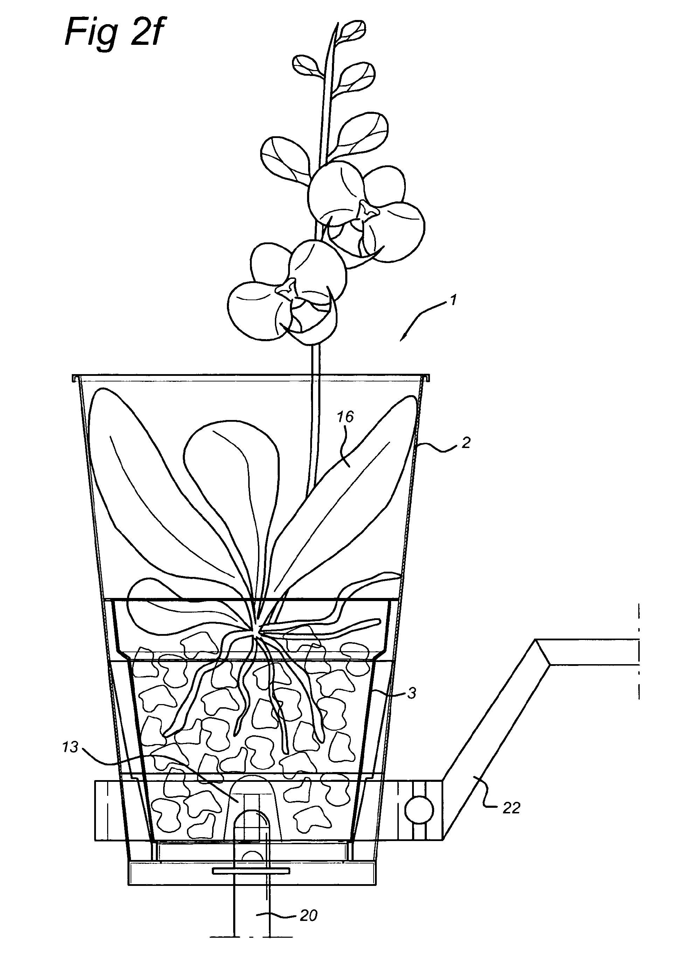

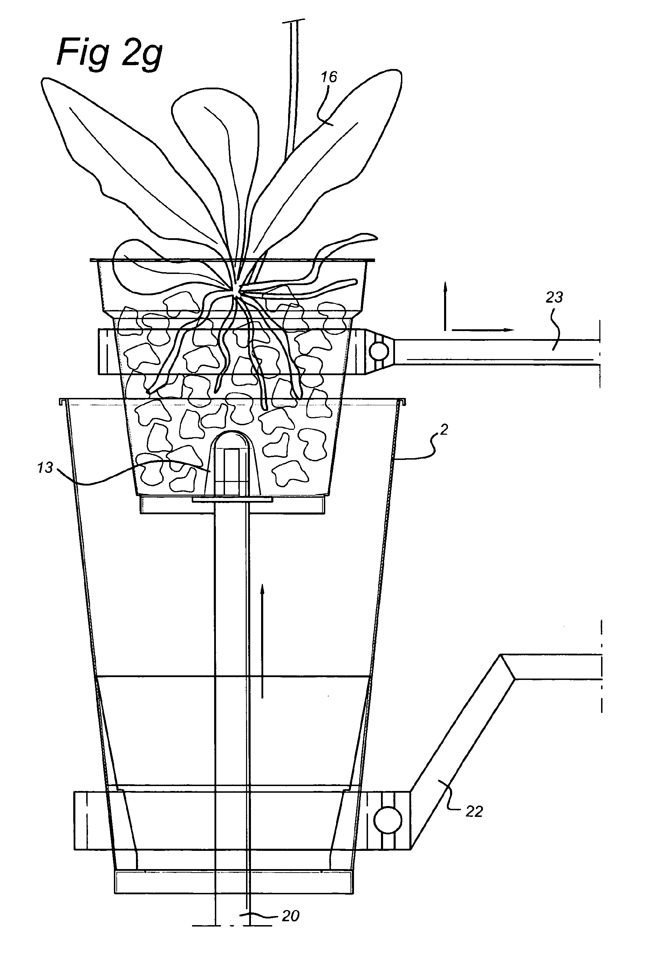

In Fig. 1, the pot assembly according to the present invention is illustrated and denoted by reference numeral 1. It comprises an outer pot 2 and an inner pot 3. As can be seen in Fig. 2, inner pot 3 can be placed inside outer pot 2. Outer pot 2 comprises a wall 4 and a bottom 6. Bottom 6 extends over a limited part of the lower surface, that is to say essentially comprises a peripheral part which is connected to wall 4. At the top side, wall 4 is provided with an edge 7. Inside wall 4, an identification chip 8 may be provided. In addition, windows 5 are provided in wall 4. These may be distributed in a symmetric or asymmetric fashion along the periphery of the wall 4.

The inner pot 3 is provided with a wall 10 on which information 11, such as a sticker, is present. A barcode or the like may be provided on this sticker, chip or by another means. The wall 10 merges into a peripheral edge 14. On the lower side, a bottom 12 is provided and the central part of the bottom 12 is embodied as a hole 13. As can be seen in the drawing, the height of the inner pot is h smaller than that of the outer pot.

Fig. 2 shows how a plant 16 is grown in the pot assembly 1 according to the present invention. Fig. 2a shows the inner pot 3. Fig. 2b shows how the plant 16 is placed in substrate 17 by any suitable cuttings machine. In this case, it is possible to first provide substrate 17 and provide a cavity therein for placing the plant 16 therein, but it is also possible to place the plant and the substrate together into the pot. Further variants are also within the scope of the invention. Ultimately, only that which is illustrated in Fig. 2b matters. Immediately thereafter, that is to say preferably at the end of the cuttings introducing device, inner pot 3 is placed inside outer pot 2. These are coaxial with respect to one another, which is indicated by means of centre axis 9. Fig. 2c also shows the height difference h.

Inner pot and outer pot are dimensioned such that the free top end of inner pot 14 is at a distance r from the opposite part of the wall 4 of the outer pot 2. This distance r is preferably smaller than 5 mm and is, more particularly, in the order of magnitude of 1 mm or less. This distance is in any case such that plant parts which develop on the plant 16 cannot extend into the space r between the top end of the inner pot and that part of the wall of the outer pot which is opposite.
Fig. 2d shows the subsequent development of the plant during the first phase of growth. Pot assemblies 1 can then be placed against one another without the risk of developing plant parts being able to grow into an adjacent pot assembly.
Fig. 2e shows that leaves are developing. They are being forcibly guided upwards by the outer pot, as a result of which they can develop above the outer pot, but not in the horizontal direction, which would lead to entanglement. Reference numeral 18 denotes air roots which always remain inside the enclosure of the outer pot 2.

Cultivation may be effected in any way which is known in the prior art, for example in a greenhouse in which an ebb-flood irrigation system can be used.

In such case, it is possible to subject the plant to a temperature shock, for example after approximately half a year, as a result of which stems which bear flowers will develop. This may be followed by a finishing phase at an increased temperature. The assembly of inner and outer pot preferably undergoes all these phases.

When the pot assembly is being transported, it is possible to monitor the exact position of the respective plant by means of the information carrier 8. In addition, it is possible to use vision techniques to link the development of the plant to the respective pot assembly. If desired, plant data can be read out by reading the label 11 through the windows 5 as label 11 is preferably positioned at such a level that the label 11 is directly in front of one of the windows 5 when the inner pot is placed inside the outer pot. Preferably, both the inner and the outer pot are made from translucent material.

At the end of the growing phase, the inner pot and outer pot have to be separated. This is illustrated in Figs. 2f,g. The outer pot 2 is held securely by means of a simple robot arm which is denoted by reference numeral 22. The inner pot is then forced upwards by means of a push-out pin 20 which pushes through hole 13. As soon as the inner pot is above the outer pot, the former can be gripped from above by the robot arm 23, as is illustrated in Fig. 2g. Thereupon, the inner pot can be easily removed and taken to the consumer via the distribution channels, while the outer pot can be re-used.

The above-described method for removing inner pot and outer pot can also be used for placing the inner pot inside the outer pot. In such a case, the inner pot is taken above the outer pot and then supported by the above-described push-out pin 20. By then lowering this push-out pin 20 with the inner pot into the outer pot, the former can be placed inside the latter. It should be understood that the inner pot can also be placed into the outer pot in a different way, for example by means of a tilting movement. The same applies to the removal of the inner pot from the outer pot.

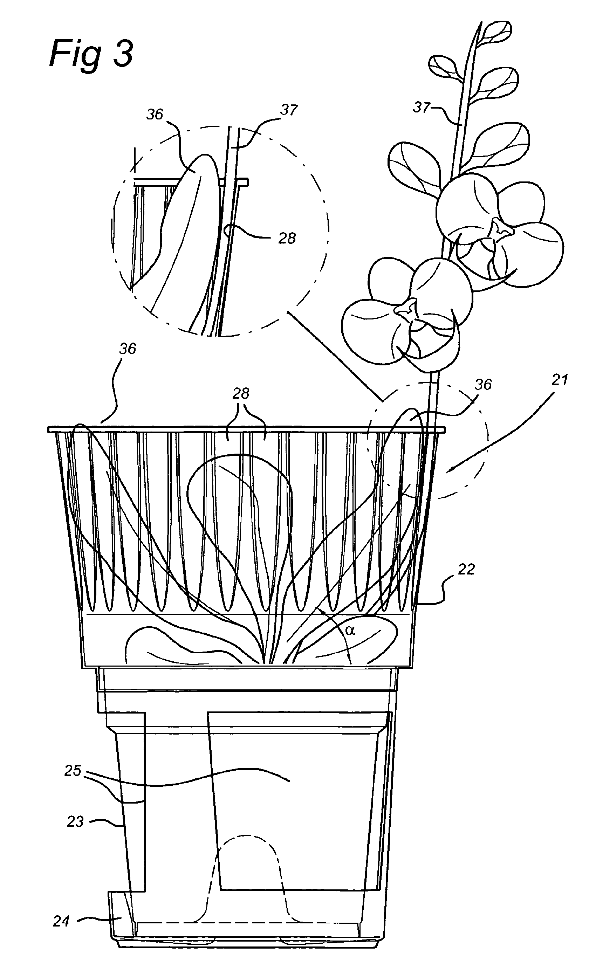

Fig. 3 shows a further embodiment of the pot assembly according to the present invention. In this case, the assembly is denoted overall by reference numeral 21 and comprises an outer pot 22 and an inner pot 23. The inner pot 23 essentially corresponds to the inner pot 3 of the previous variant embodiment. The outer pot 22 is provided with windows which, in this example, are significantly larger than the windows illustrated in the previous embodiment and these windows are denoted by reference numeral 25. At least 50% and preferably at least 75% of the wall surface of the outer pot which is opposite the wall of the inner pot is designed as an opening. At the bottom side, the outer pot is provided with projections 24 for, on the one hand, supporting the bottom of the inner pot 23 and, on the other hand, these projections 24 act as denesting projections when a number of outer pots 22 are stacked inside one another.

At the top side, the outer pot 22 is provided with an undulation 28 which extends over some distance of the height of the outer wall of the outer pot. The leaves 36 of the plant 16 may lie against such undulation while behind the latter (viewed in the direction of the outer wall of the outer pot), a stem 37 bearing a flower may grow for example.

Fig. 3 shows that the angle a at which the leaves grow to the horizontal is greater than 45° so that the leaves are guided upwards by the wall of the outer pot.

By means of the present invention, the practice of placing plants further apart can be dispensed with completely or can be significantly reduced. Since all the relevant actions can be carried out in a reliable mechanized manner, the relevant costs are also significantly reduced. In addition, it is possible to achieve a higher yield, as has been described above.

## Claims

1. Pot assembly (1, 21) comprising an inner pot (3) and an outer pot (2) accommodating the inner pot, wherein said outer pot (2, 22), in the accommodation position, extends in the height direction beyond said inner pot (h), wherein the outside of the top end (14) of said inner pot (3) adjoins the inner wall of said outer pot in said accommodation position substantially without clearance (r), **characterized in that** said pot assembly (1, 21) is embodied to accommodate a pot-grown orchid, the wall of said inner pot (3) is translucent and the wall of said outer pot (2, 22) which is situated near said translucent wall of said inner pot is translucent.

2. Pot assembly according to Claim 1, wherein said inner and outer pot comprise a bottom (12, 6), wherein the bottom (12) of said inner pot, in the position of use, viewed from above, extends over a larger surface than said outer pot towards the centre (9) of said pot assembly.

3. Pot assembly according to Claim 2, wherein the bottom (12) of said inner pot is provided with a push-out accomodation (13) and the bottom of the outer pot is provided with an opening near said push-out accomodation.

4. Pot assembly according to one of the preceding claims, wherein the wall of said outer pot is provided with a window (5) near the wall of said inner pot.

5. Pot assembly according to Claim 4, wherein said inner pot is provided with information (11) at said window (5).

6. Pot assembly according to one of the preceding claims, wherein the top end (14) of said inner pot (3) engages with the inner wall of said outer pot (2) in a clamping manner.

7. Pot assembly according to one of the preceding claims, wherein said inner pot and outer pot each comprise a bottom (12, 6), in which said bottoms lie against one another in the accommodation position.

8. Pot assembly according to one of the preceding claims, wherein the inner wall of the outer pot and the outer wall of said inner pot are provided with engagement means.

9. Pot assembly according to one of the preceding claims, wherein the part (h) of the outer pot which, in the accommodation position, extends above the inner pot is substantially closed.

10. Pot assembly according to one of the preceding claims, wherein said outer pot extends beyond said inner pot over at least half the height of said inner pot.

11. Pot assembly according to one of the preceding claims, wherein said outer pot, near the free top end, is of an undulating design.

12. Combination comprising a pot assembly comprising an inner pot (3) and an outer pot (2, 22) receiving the inner pot, wherein said outer pot (2, 22), in the accommodation position, extends (h) beyond said inner pot in the height direction, in which the outside of the top end (14) of said inner pot (3) adjoins the inner wall of said outer pot in said accommodation position substantially without clearance (r), as well as a pot-grown orchid in said inner pot having leaves, in which said leaves are supported on the wall of said outer pot.

13. Combination according to Claim 12, wherein said leaves are at an angle (α) greater than 45° with respect to the horizontal (substrate).

14. Method for cultivating a pot-grown orchid (16) comprising placing said pot-grown orchid (16) with substrate (17) into an inner pot (3), before, simultaneously therewith or immediately thereafter placing said inner pot into an outer pot (2), said outer pot, in the accommodation position, extending (h) beyond said inner pot in the height direction, subsequently cultivating said plant and removing said inner pot from said outer pot just before delivery of said pot-grown orchid.

15. Method according to Claim 14, wherein said outer pot is re-used.

16. Method according to one of claims 14-15 wherein said cultivation takes at least half a year.

17. Method according to one of Claims 14-16, wherein said plant comprises a plant having air roots (18).

18. Method according to one of Claims 14-17, wherein said inner pot and outer pot are transported from the introduction location of the plant to the growing area together.

19. Method according to Claim 18, wherein said outer pot rests on a dish.

## Patentansprüche

1. Topfanordnung (1, 21), umfassend einen inneren Topf (3) und einen äußeren Topf (2), der den inneren Topf aufnimmt, wobei der äußere Topf (2, 22) in der Aufnahmeposition über den inneren Topf herausragt (h), wobei die Außenseite des Kopfstückes (14) des inneren Topfes (3) an der Innenwand des äußeren Topfes in der Aufnahmeposition ohne Abstand (r) anliegt, **dadurch gekennzeichnet, dass** die Topfanordnung (1, 21) zur Aufnahme einer topfgezogenen Orchidee ausgebildet ist, die Wand des inneren Topfes (3) lichtdurchlässig ist und die Wand des äußeren Topfes (2, 22), welche nahe der lichtdurchlässigen Wand des inneren Topfes angeordnet ist, lichtdurchlässig ist.

2. Topfanordnung nach Anspruch 1, wobei der innere und der äußere Topf einen Boden (12, 6) umfasst, wobei der Boden (12) des inneren Topfes in der Anwendungsposition von oben aus gesehen sich über eine größere Oberfläche zum Zentrum (9) der Topfanordnung ausbreitet als der äußere Topf.

3. Topfanordnung nach Anspruch 2, wobei der Boden (12) des inneren Topfes mit einer Ausdrückeinrichtung (13) ausgestattet ist und der Boden des äußeren Topfes mit einer Öffnung nahe der Ausdrückeinrichtung ausgestattet ist.

4. Topfanordnung nach einem der vorhergehenden Ansprüche, wobei die Wand des äußeren Topfes mit einem Fenster (5) nahe der Wand des inneren Topfes ausgestattet ist.

5. Topfanordnung nach Anspruch 4, wobei der innere Topf mit einer Information (11) an dem Fenster (5) ausgestattet ist.

6. Topfanordnung nach einem der vorhergehenden Ansprüche, wobei das Kopfstück (14) des inneren Topfes (3) mit der Innenwand des äußeren Topfes (2) mit Klemmung kooperiert.

7. Topfanordnung nach einem der vorhergehenden Ansprüche, wobei der innere Topf und der äußere Topf jeweils einen Boden (12, 6) umfassen, wobei die Böden in der Aufnahmeposition aufeinander liegen.

8. Topfanordnung nach einem der vorhergehenden Ansprüche, wobei die Innenwand des äußeren Topfes und die Außenwand des inneren Topfes mit Klemmmitteln ausgestattet sind.

9. Topfanordnung nach einem der vorhergehenden Ansprüche, wobei der Teil (h) des äußeren Topfes, welcher in der Aufnahmeposition über den inneren Topf herausragt, im Wesentlichen geschlossen ist.

10. Topfanordnung nach einem der vorhergehenden Ansprüche, wobei der äußere Topf über den inneren Topf wenigstens um die halbe Höhe des inneren Topfes herausragt.

11. Topfanordnung nach einem der vorhergehenden Ansprüche, wobei der äußere Topf nahe dem Kopfstück ein wellenförmiges Design aufweist.

12. Zusammenstellung, umfassend eine Topfanordnung, die einen inneren Topf (3) und einen äußeren Topf (2, 22), der den inneren Topf aufnimmt, umfasst, wobei der äußere Topf (2, 22) in der Aufnahmeposition über den inneren Topf nach oben herausragt, wobei die Außenseite des Kopfstückes (14) des inneren Topfes (3) an der Innenwand des äußeren Topfes in der Aufnahmeposition im Wesentlichen ohne Abstand (r) anliegt, sowie eine topfgezogene Orchidee im inneren Topf mit Blättern, wobei die Blätter von der Wand des äußeren Topfes gehalten werden.

13. Zusammenstellung nach Anspruch 12, wobei die Blätter zur Horizontalen (Substrat) mit einem Winkel (α) von mehr als 45° anliegen.

14. Verfahren zur Kultivierung einer topfgezogenen Orchidee (16), umfassend das Eintopfen der topfgezogenen Orchidee (16) mit einem Substrat (17) in einen inneren Topf (3), wobei der innere Topf davor, gleichzeitig oder unmittelbar danach in einen äußeren Topf (2) eingebracht wird, wobei der äußere Topf in der Aufnahmeposition über den inneren Topf nach oben herausragt (h), anschließend die Pflanze kultiviert wird und der innere Topf von dem äußeren Topf unmittelbar vor Auslieferung der topfgezogenen Orchidee entfernt wird.

15. Verfahren nach Anspruch 14, wobei der äußere Topf mehrmals verwendet wird.

16. Verfahren nach einem der Ansprüche 14 bis 15, wobei die Kultivierung wenigstens ein halbes Jahr dauert.

17. Verfahren nach einem der Ansprüche 14 bis 16, wobei die Pflanze eine Pflanze mit Luftwurzeln (18) umfasst.

18. Verfahren nach einem der Ansprüche 14 bis 17, wobei der innere Topf und der äußere Topf vom Ort des Eintopfens der Pflanze bis zum Wachstumsort zusammen transportiert werden.

19. Verfahren nach Anspruch 18, wobei der äußere Topf auf einer Schale steht.

## Revendications

1. Assemblage de pots (1, 21) comprenant un pot intérieur (3) et un pot extérieur (2) renfermant ledit pot intérieur, sachant que, dans la position d'intégration, ledit pot extérieur (2, 22) fait saillie (h) au-delà dudit pot intérieur dans le sens de la hauteur, la face extérieure de l'extrémité supérieure (14) dudit pot intérieur (3) étant attenante à la paroi intérieure dudit pot extérieur dans ladite position d'intégration, pour l'essentiel sans aucun interstice (r), **caractérisé par le fait que** ledit assemblage de pots (1, 21) est réalisé pour renfermer une orchidée à croissance en pot, la paroi dudit pot intérieur (3) étant translucide et la paroi dudit pot extérieur (2, 22), qui est située à proximité de ladite paroi translucide dudit pot intérieur, étant translucide.

2. Assemblage de pots selon la revendication 1, dans lequel lesdits pots intérieur et extérieur présentent un fond (12, 6), le fond (12) dudit pot intérieur s'étendant dans la position d'utilisation, observé par-dessus, sur une plus grande surface que ledit pot extérieur en direction du centre (9) dudit assemblage de pots.

3. Assemblage de pots selon la revendication 2, dans lequel le fond (12) dudit pot intérieur est muni d'une cavité d'extraction (13), et le fond du pot extérieur est pourvu d'un orifice à proximité de ladite cavité d'extraction.

4. Assemblage de pots selon l'une des revendications précédentes, dans lequel la paroi dudit pot extérieur est dotée d'une fenêtre (5) à proximité de la paroi dudit pot intérieur.

5. Assemblage de pots selon la revendication 4, dans lequel ledit pot intérieur comporte des informations (11) au niveau de ladite fenêtre (5).

6. Assemblage de pots selon l'une des revendications précédentes, dans lequel l'extrémité supérieure (14) dudit pot intérieur (3) coopère, par effet de coincement, avec la paroi intérieure dudit pot extérieur (2).

7. Assemblage de pots selon l'une des revendications précédentes, dans lequel lesdits pots intérieur et extérieur présentent chacun un fond (12, 6), lesdits fonds étant en applique l'un contre l'autre dans la position d'intégration.

8. Assemblage de pots selon l'une des revendications précédentes, dans lequel la paroi intérieure du pot extérieur, et la paroi extérieure dudit pot intérieur, sont pourvues de moyens d'interaction.

9. Assemblage de pots selon l'une des revendications précédentes, dans lequel la partie (h) du pot extérieur, qui s'étend au-dessus du pot intérieur dans la position d'intégration, est substantiellement fermée.

10. Assemblage de pots selon l'une des revendications précédentes, dans lequel ledit pot extérieur s'étend, au-delà dudit pot intérieur, sur au moins la moitié de la hauteur dudit pot intérieur.

11. Assemblage de pots selon l'une des revendications précédentes, dans lequel ledit pot extérieur est de configuration décrivant des ondulations à proximité de l'extrémité supérieure libre.

12. Ensemble combiné incluant un assemblage de pots qui comprend un pot intérieur (3) et un pot extérieur (2, 22) recevant ledit pot intérieur, sachant que, dans la position d'intégration, ledit pot extérieur (2, 22) fait saillie (h) au-delà dudit pot intérieur dans le sens de la hauteur, assemblage dans lequel la face extérieure de l'extrémité supérieure (14) dudit pot intérieur (3) est attenante à la paroi intérieure dudit pot extérieur dans ladite position d'intégration, pour l'essentiel sans aucun interstice (r) ; ainsi qu'une orchidée à croissance en pot qui est munie de feuilles, dans ledit pot intérieur, lesdites feuilles étant en appui contre la paroi dudit pot extérieur.

13. Ensemble combiné selon la revendication 12, dans lequel lesdites feuilles décrivent un angle (α) supérieur à 45° par rapport à l'horizontale (substrat).

14. Procédé de culture d'une orchidée (16) à croissance en pot, consistant à introduire ladite orchidée (16) à croissance en pot dans un pot intérieur (3), avec du substrat (17) ; à insérer ledit pot intérieur dans un pot extérieur (2) à un stade préalable, en simultanéité ou en succession directe, sachant que, dans la position d'intégration, ledit pot extérieur fait saillie (h) au-delà dudit pot intérieur dans le sens de la hauteur ; à cultiver ensuite ladite plante ; et à enlever ledit pot intérieur dudit pot extérieur juste avant la livraison de ladite orchidée à croissance en pot.

15. Procédé selon la revendication 14, dans lequel ledit pot extérieur est réutilisé.

16. Procédé selon l'une des revendications 14-15, dans lequel ladite culture dure au moins un semestre.

17. Procédé selon l'une des revendications 14-16, dans lequel ladite plante comprend une plante munie de racines aériennes (18).

18. Procédé selon l'une des revendications 14-17, dans lequel ledit pot intérieur et ledit pot extérieur sont transportés conjointement depuis le lieu d'introduction de la plante jusqu'à la zone de croissance.

19. Procédé selon la revendication 18, dans lequel ledit pot extérieur repose sur une soucoupe.
